(19) Europäisches Patentamt
European Patent Office
Office européen des brevets

(11) **EP 3 947 215 B1**

(12) **EUROPÄISCHE PATENTSCHRIFT**

(45) Veröffentlichungstag und Bekanntmachung des Hinweises auf die Patenterteilung:
**09.11.2022   Patentblatt 2022/45**

(21) Anmeldenummer: **20721385.1**

(22) Anmeldetag: **27.03.2020**

(51) Internationale Patentklassifikation (IPC):
**B65G 43/10** *(2006.01)*

(52) Gemeinsame Patentklassifikation (CPC):
**B65G 43/10;** B60K 2006/268; B60W 2510/0676; B60W 2510/105; B60W 2520/10; B60W 2530/10; B60W 2540/10; B60W 2552/35; B60W 2556/50

(86) Internationale Anmeldenummer:
**PCT/AT2020/060132**

(87) Internationale Veröffentlichungsnummer:
**WO 2020/198772 (08.10.2020 Gazette 2020/41)**

(54) **VERFAHREN UND FÖRDEREINRICHTUNG ZUR VERBESSERTEN POSITIONSBESTIMMUNG EINES AUF DER FÖRDEREINRICHTUNG TRANSPORTIERTEN OBJEKTS**

METHOD AND CONVEYING APPARATUS FOR THE IMPROVED DETERMINATION OF THE POSITION OF AN OBJECT TRANSPORTED ON THE CONVEYING APPARATUS

PROCÉDÉ ET SYSTÈME DE TRANSPORT POUR UNE DÉTERMINATION DE POSITION AMÉLIORÉE D'UN OBJET TRANSPORTÉ SUR LE SYSTÈME DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2019   AT 502752019**

(43) Veröffentlichungstag der Anmeldung:
**09.02.2022   Patentblatt 2022/06**

(73) Patentinhaber: **TGW Mechanics GmbH 4600 Wels (AT)**

(72) Erfinder:
• **SCHÖNBAUER, Manuel**
  **4715 Taufkirchen an der Trattnach (AT)**
• **KARER, Florian Georg**
  **5251 Höhnhart (AT)**
• **GRIMMINGER, Richard**
  **4612 Scharten (AT)**
• **KALTSEIS, Simon**
  **4083 Haibach ob der Donau (AT)**
• **RAUSCH, Martin**
  **4810 Gmunden (AT)**

(74) Vertreter: **Burger, Hannes Anwälte Burger & Partner Rechtsanwalt GmbH Rosenauerweg 16 4580 Windischgarsten (AT)**

(56) Entgegenhaltungen:
WO-A1-2011/038439      WO-A1-2011/038441
US-A- 5 070 995        US-A1- 2014 277 698
US-B2- 7 681 712

**Beschreibung**

Die Erfindung betrifft ein Verfahren zur Positionsbestimmung eines Objekts, das auf einer Fördereinrichtung durch Förderelemente gefördert wird, und umfasst die Schritte:

    a) Setzen eines Positionswertes, welcher dem Objekt in einer Steuerung der Fördereinrichtung zugeordnet ist, auf die Position eines ersten Erfassungsbereichs eines an der Fördereinrichtung ortsfest installierten, ersten Sensors, wenn das Objekt im ersten Erfassungsbereich detektiert wird,
    b) Berechnen einer Position des Objekts mit Hilfe von Drehsignalen von Antrieben für die Förderelemente der Fördereinrichtung ausgehend von der Position des ersten Erfassungsbereichs während einer Bewegung des Objekts vom ersten Erfassungsbereich weg und
    c) Setzen des Positionswertes, welcher dem Objekt in der Steuerung der Fördereinrichtung zugeordnet ist, auf die Position eines zweiten Erfassungsbereichs des ersten Sensors oder

eines an der Fördereinrichtung ortsfest installierten, zweiten Sensors, wenn das Objekt im zweiten Erfassungsbereich detektiert wird.

Weiterhin betrifft die Erfindung eine Fördereinrichtung mit einer Steuerung zur Positionsbestimmung eines auf der Fördereinrichtung durch Förderelemente geförderten Objekts, wobei die Steuerung dazu ausgebildet ist:

    a) einen Positionswert, welcher dem Objekt in der Steuerung der Fördereinrichtung zugeordnet ist, auf die Position eines ersten Erfassungsbereichs eines an der Fördereinrichtung ortsfest installierten, ersten Sensors zu setzen, wenn das Objekt im ersten Erfassungsbereich detektiert wird,
    b) eine Position des Objekts mit Hilfe von Drehsignalen von Antrieben für die Förderelemente der Fördereinrichtung ausgehend von der Position des ersten Erfassungsbereichs während einer Bewegung des Objekts vom ersten Erfassungsbereich weg zu berechnen und
    c) den Positionswert, welcher dem Objekt in der Steuerung der Fördereinrichtung zugeordnet ist, auf die Position eines zweiten Erfassungsbereichs des ersten Sensors oder eines an der Fördereinrichtung ortsfest installierten, zweiten Sensors zu setzen, wenn das Objekt im zweiten Erfassungsbereich detektiert wird.

Ein solches Verfahren und eine solche Fördereinrichtung sind aus dem Stand der Technik prinzipiell bekannt. Beispielsweise kann die Position des Objekts dort grundsätzlich mit Hilfe von Drehsignalen von Antrieben für Förderelemente der Fördereinrichtung berechnet werden, etwa mit Hilfe eines Drehgebers oder eines Hall-Sensors eines Antriebsmotors der Förderrolle sowie dem Umfang der Förderrolle (Schritt b). Unvorhergesehene Ereignisse, wie zum Beispiel das Durchrutschen von Förderrollen, eine Kollision von zwei Objekten, und so weiter können dazu führen, dass die berechnete Position von der realen Position mitunter stark abweicht. Daher wird der Positionswert des Objekts in der Steuerung der Fördereinrichtung auf bekannte Positionen von Sensoren (rück)gesetzt, die entlang der Fördereinrichtung ortsfest installiert sind (Schritte a und c).

Neuere Untersuchungen haben jedoch gezeigt, dass nicht nur unvorhergesehene Ereignisse zu einer Abweichung der berechneten Position von der realen Position führen, sondern es auch systematische Abweichungen gibt, die immer auftreten, auch wenn diese in der Regel deutlich kleiner sind als die von den unvorhergesehenen Ereignissen verursachten Abweichungen. Immerwährend steigende Anforderungen an die Positioniergenauigkeit auf Fördereinrichtungen des Warenhandels führen aber dazu, dass sich auch diese kleinen Abweichungen störend auf die auf einer Fördereinrichtung ablaufenden Vorgänge auswirken, insbesondere in einem Lager- und Kommissioniersystem. US5070995A offenbart ein Verfahren gemäß dem Oberbegriff des Anspruchs 1 und eine Fördereinrichtung gemäß dem Oberbegriff des Anspruchs 15.

Eine Aufgabe ist es daher, die Positionsbestimmung eines auf der Fördereinrichtung transportierten Objekts zu verbessern. Insbesondere sollen auch systematisch auftretende Abweichungen berücksichtigt werden.

Die Aufgabe der Erfindung wird mit einem Verfahren der eingangs genannten Art gelöst, das zusätzlich die folgenden Schritte umfasst:

    d) Ermitteln einer Abweichung zwischen der mit den Drehsignalen der Antriebe berechneten Position und der Position des zweiten Erfassungsbereichs nachdem das Objekt im zweiten Erfassungsbereich detektiert wurde, und
    e) Nutzen der ermittelten Abweichung für die Berechnung einer korrigierten Position des Objekts mit Hilfe der Drehsignale der Antriebe während einer Bewegung des Objekts vom zweiten Erfassungsbereich weg.

Die Aufgabe der Erfindung wird auch mit einer Fördereinrichtung der eingangs genannten Art gelöst, bei dem die Steuerung zusätzlich dazu ausgebildet ist,

    d) eine Abweichung zwischen der mit den Drehsignalen der Antriebe berechneten Position und der Position des zweiten Erfassungsbereichs zu ermitteln, nachdem das Objekt im zweiten Erfassungsbereich detektiert wurde, und
    e) die ermittelte Abweichung für die Berechnung einer korrigierten Position des Objekts mit Hilfe der Drehsignale der Antriebe während einer Bewegung des Objekts vom zweiten Erfassungsbereich weg heranzuziehen.

Durch die vorgeschlagenen Maßnahmen entspricht die mit den Drehsignalen der Antriebe berechnete korrigierte Position besser der realen oder tatsächlichen Position des Objekts auf der Fördereinrichtung.

Grundsätzlich kann das beschriebene Verfahren ohne explizite Vorgabe einer Soll-Position für ein Objekt ausgeführt werden, im Besonderen eignet sich das Verfahren jedoch auch im Rahmen einer Positionsregelung für die Objekte. In diesem Fall wird seitens der Steuerung eine Soll-Position für das Objekt vorgegeben, deren Einhaltung mit Hilfe der korrigierten Position überprüft wird. Die Förderelemente beziehungsweise deren Antriebe bilden dabei die Stellglieder des Regelkreises und können gleichzeitig ein Teil des Positionsmeßsystems sein, und die Steuerung übernimmt oder umfasst die Funktion des (Positions)Reglers (closed loop control). Andere Regelkreise, wie zum Beispiel zur Regelung einer Drehzahl und/oder eines Antriebsmoments einer Förderrolle sind natürlich zusätzlich oder alternativ möglich.

Ein Kennzeichen des vorgeschlagenen Verfahrens ist es also, dass das Herstellen einer physischen Ist-Position eines Objekts im Sinne einer höchstmöglichen Übereinstimmung zwischen der gewünschten Soll-Position und der realen Ist-Position des Objekts (Positionsregelung) a priori nicht im Fokus steht, sondern eine höchstmögliche Übereinstimmung zwischen der der vermuteten/ermittelten Ist-Position und der realen Ist-Position angestrebt wird. Mit anderen Worten soll die gemessene Position möglichst gut die reale Ist-Position des Objekts widerspiegeln, das heißt der Messfehler oder die Messungenauigkeit soll möglichst klein sein. Dass damit auch eine gewünschte Soll-Position mit hoher Genauigkeit erreicht werden kann, liegt zwar auf der Hand, ist aber ein weiterer Aspekt des Verfahrens. Demzufolge betrifft die Erfindung im Grunde primär ein Messverfahren und erst sekundär ein Regelverfahren.

Durch die vorgeschlagenen Maßnahmen kann die Anzahl der ortsfest installierten Sensoren gegenüber bekannten Lösungen deutlich reduziert werden. In der einfachsten Ausführungsform sind lediglich zwei ortsfeste Sensoren für das vorgeschlagene Verfahren erforderlich.

Zwar ist für das Synchronisieren der mit Hilfe von Drehsignalen der Antriebe gemessenen Position mit der Absolutposition eines ortsfest installierten Sensors im Grunde nur ein einziger ortsfest installierter Sensor nötig (und damit eigentlich weniger als die für das vorgeschlagene Verfahren zumindest nötigen Sensoren), jedoch ergibt sich durch die vorgeschlagenen Maßnahmen auf einer Förderanlage in Summe dennoch eine Einsparung. Bei bekannten System muss nämlich bei einem systematischen Fehler bei der Positionsbestimmung mit den Drehsignalen der Antriebe immer wieder die mit den Antrieben gemessene Position mit den Absolutpositionen ortsfest installierter Sensoren synchronisiert werden. Die Größe einer realen Förderanlage erfordert eine Vielzahl solcher Korrekturen, um den Fehler bei der Positionsbestimmung mit den Antrieben in einem akzeptablen Rahmen zu halten. Im Idealfall werden für das vorgeschlagene Verfahren jedoch lediglich zwei ortsfest installierte Sensoren benötigt (nämlich wenn ein systematischer Fehler bei der Positionsbestimmung mit den Drehsignalen der Antriebe durch die vorgeschlagenen Maßnahmen vollständig eliminiert werden kann). Zumindest aber kann die Anzahl weiterer benötigter Korrekturen der gemessenen Objekt-Position durch ortsfest installierte Sensoren im Verlauf der Fördereinrichtung gegenüber bekannten Lösungen reduziert werden, da der Messfehler zwischen den ortsfest installierten Sensoren vergleichsweise klein bleibt.

Insbesondere kann die Distanz zwischen (weiteren) ortsfest installierten Sensoren auf der Fördereinrichtung so gewählt werden, dass ein allfälliger (absoluter) Messfehler bei der Positionsbestimmung mit den Drehsignalen der Antriebe auf dieser Distanz größer gleich einem (absoluten) Messfehler der ortsfest installierten Sensoren ist. Auf diese Weise ist sichergestellt, dass mit einer Synchronisierung der mit den Antrieben gemessenen Position mit der Absolutposition eines ortsfest installierten Sensors eine Verbesserung der Messung erzielt wird.

Besonders vorteilhaft ist es, wenn die auf der Fördereinrichtung geförderten Objekte verformbare Beutel umfassen, welche direkt (also ohne Ladehilfsmittel) auf Förderelementen gefördert werden, welche als Förderrollen ausgebildet sind, und die Berechnung einer korrigierten Position für diese Beutel ausgeführt wird. Die äußere Oberfläche des Beutels schlingt sich bei einer solchen Anordnung teilweise um die Förderrollen herum, wobei die im Inneren des Beutels befindliche Ware diese Bewegung nicht zwangsläufig mit vollführt. Es kommt daher zu einer dynamischen Verschiebung zwischen dem Beutel und der damit transportierten Ware, die zu deutlichen systematischen Abweichungen zwischen der mit den Drehsignalen der Antriebe berechneten Position und der realen Position führt. Mit Hilfe der vorgeschlagenen Maßnahmen kann die Position eines solchen Beutels mit höherer Genauigkeit bestimmt werden.

Besonders vorteilhaft ist es weiterhin, wenn das vorgestellte Verfahren in oder vor einem Staubereich für die auf der Fördereinrichtung geförderten Objekte ausgeführt wird. In einem Staubereich herrschen nämlich besondere Anforderungen an die Positioniergenauigkeit, da dort Objekte mit geringem Abstand zueinander oder überhaupt dicht an dicht angehalten werden. Mit Hilfe der vorgeschlagenen Maßnahmen ist es nun zum Beispiel möglich, einen Objekt-Block zu bilden, in dem kein oder nur geringer Staudruck herrscht. Ein Staudruck liegt jedenfalls dann nicht vor, wenn aufeinanderfolgende Objekte mit gegenseitigem Abstand angehalten und/oder transportiert werden. Ein Staudruck kann dagegen vorliegen, wenn aufeinanderfolgende Objekte einander berühren, wenn sie angehalten und/oder transportiert werden.

Generell kann gleichwertig die Objekt-Vorderkante oder die Objekt-Hinterkante für das vorgestellte Verfahren herangezogen werden. Demzufolge werden die entsprechenden Verfahrensschritte ausgelöst, wenn die Objekt-Vorderkante oder die Objekt-Hinterkante die Erfassungsbereiche erreicht beziehungsweise passiert.

Weiterhin ist es natürlich auch möglich, die Objekt-Länge eines Objekts zu ermitteln und der beschriebenen Korrektur zu unterwerfen. Die Objekt-Länge eines Objekts entspricht der Distanz zwischen Objekt-Vorderkante und Objekt-Hinterkante. Demzufolge ist die korrigierte Objekt-Länge eines Objekts die Distanz zwischen der korrigierten Position der Objekt-Vorderkante und der korrigierten Position der Objekt-Hinterkante.

Die ermittelte Objekt-Länge kann auch für eine Plausibilitätsprüfung herangezogen werden, ob das an einem Erfassungsbereich detektierte Objekt einem erwarteten Objekt entspricht. Dabei geht man von der Annahme aus, dass die Abweichung zwischen der mit den Drehsignalen der Antriebe berechneten Position und der Position des zweiten Erfassungsbereichs ein bestimmtes Maß nicht überschreitet. Demzufolge kann in der Steuerung abgeschätzt werden, welches Objekt sich am zweiten Erfassungsbereich gerade vorbei bewegt, wenn dort ein Objekt detektiert wird. Weicht die am ersten Erfassungsbereich und die am zweiten Erfassungsbereich ermittelte Objektlänge übermäßig stark voneinander ab oder wird gar kein Objekt detektiert, obwohl eines erwartet wird, dann kann auf eine Störung auf der Fördereinrichtung geschlossen werden, beispielsweise weil sich mehrere Objekte ineinander verkeilt haben oder Objekte von der Förderanlage heruntergefallen sind.

Ergänzend wird auch angemerkt, dass die Fördereinrichtung eine (Haupt)Förderrichtung aufweisen kann. Positionen, die einer anderen Position in Förderrichtung nachfolgen, liegen "stromabwärts". Positionen, die in Förderrichtung vor einer anderen Position liegen, liegen "stromaufwärts". Demzufolge liegt der zweite Erfassungsbereich stromabwärts zum ersten Erfassungsbereich, oder anders gesagt liegt der erste Erfassungsbereich stromaufwärts zum zweiten Erfassungsbereich. Ein Objekt wird auf der Fördereinrichtung in einer Förderrichtung von einer stromaufwärts liegenden Position in Richtung einer stromabwärts liegenden Position gefördert. Eine Bewegung eines Objekts von einem Erfassungsbereich weg bedeutet somit insbesondere eine stromabwärts gerichtete Bewegung.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn die Schritte b) bis e) rekursiv wiederholt werden, wobei bei einem neuerlichen Durchlauf des Schritts c) ein weiterer Erfassungsbereich des ersten Sensors oder zweiten Sensors oder eines an der Fördereinrichtung ortsfest installierten, dritten Sensors an die Stelle des zweiten Erfassungsbereichs tritt. Auf diese Weise kann die erreichte Genauigkeit bei der Positionsbestimmung aufrechterhalten oder sogar verbessert werden, wenn das Objekt einen weiteren Erfassungsbereich eines ortsfest installierten Sensors passiert. Die Rolle des ersten Erfassungsbereiches bleibt dabei fix und ändert sich beim rekursiven Durchlauf der Verfahrensschritte nicht. Das heißt, die Position des Objekts wird bei dieser Variante des Verfahrens ausgehend von der Position des ersten Erfassungsbereichs aus berechnet. Demzufolge wird ein mit den Drehsignalen der Antriebe berechneter Weg zur Position des ersten Erfassungsbereichs hinzugerechnet, um die berechnete Position zu erhalten. Diese Variante eignet sich insbesondere für Fördereinrichtungen, die sich von ihrer Art her im Transportverlauf der Objekte nicht oder nur wenig verändern. Beispielsweise ist eine solche Fördereinrichtung nur aus geraden Förderabschnitten aufgebaut.

Günstig ist es weiterhin, wenn die Schritte b) bis e) rekursiv wiederholt werden, wobei der zweite Erfassungsbereich an die Stelle des ersten Erfassungsbereichs tritt, und bei einem neuerlichen Durchlauf des Schritts c) ein weiterer Erfassungsbereich des ersten Sensors oder zweiten Sensors oder eines an der Fördereinrichtung ortsfest installierten, dritten Sensors an die Stelle des zweiten Erfassungsbereichs tritt. Die Rolle des ersten Erfassungsbereiches bleibt bei dieser Variante nicht fix, sondern ändert sich bei jedem rekursiven Durchlauf der Verfahrensschritte. Das heißt, die Position des Objekts wird bei dieser Variante des Verfahrens ausgehend von der Position des vom Objekt zuletzt passierten Erfassungsbereichs aus berechnet. Demzufolge wird ein mit den Drehsignalen der Antriebe berechneter Weg zur Position des vom Objekt zuletzt passierten Erfassungsbereichs hinzugerechnet, um die berechnete Position zu erhalten. Diese Variante des Verfahrens eignet sich im Besonderen für Fördereinrichtungen, die sich von ihrer Art her im Transportverlauf der Objekte stark verändern. Beispielsweise umfasst eine solche Fördereinrichtungen kurvige Förderabschnitte, gerade Förderabschnitte, Abzweigungen und dergleichen. Eine Kombination mit der zuvor genannten Verfahrensvariante ist dabei natürlich möglich.

Günstig ist es außerdem, wenn die in Schritt d) ermittelte Abweichung auf die Distanz zwischen einem Bezugspunkt und der mit den Drehsignalen der Antriebe berechneten Position des Objekts bezogen wird und die Korrektur in Schritt e) relativ zu dem vom Objekt zurückgelegten Weg ausgehend vom zweiten Erfassungsbereich erfolgt. Es wird also eine relative Abweichung zwischen der mit den Drehsignalen der Antriebe berechneten Position und der Position des zweiten Erfassungsbereichs ermittelt. Der Bezugspunkt bezeichnet dabei insbesondere die Null-Position eines Objekts, von der aus die weiteren Positionen des Objekts berechnet werden. Der Bezugspunkt kann aber im Grunde beliebig gewählt werden. Insbesondere kann der Bezugspunkt auf die Position eines Erfassungsbereichs gesetzt werden.

Bleibt die Rolle des ersten Erfassungsbereiches bei einem allfälligen, rekursiven Durchlauf der Verfahrensschritte fix und ändert sich nicht, dann kann der Bezugspunkt insbesondere auf die Position des ersten Erfassungsbereichs gesetzt werden. Die Abweichung zwischen der mit den Drehsignalen der Antriebe berechneten Position und der Position des zweiten Erfassungsbereichs wird dann auf die Entfernung zum ersten Erfassungsbereich bezogen.

Ändert sich dagegen die Rolle des ersten Erfassungsbereiches bei jedem rekursiven Durchlauf der Verfahrensschritte und bleibt nicht fix, dann kann der Bezugspunkt insbesondere auf die Position des vom Objekt zuletzt passierten Erfassungsbereichs gesetzt werden. Die Abweichung zwischen der mit den Drehsignalen der Antriebe berechneten Position und der Position des zweiten Erfassungsbereichs wird dann auf die Entfernung zum zuletzt vom Objekt passierten Erfassungsbereich bezogen.

Besonders vorteilhaft ist es, wenn im Schritt d) ein Korrekturfaktor

$$k = \frac{\Delta P}{P_{Sig}} = \frac{P_2 - P_{sig}}{P_{Sig}}$$

berechnet wird und im Schritt e) die korrigierte Position

$$P_{korr} = (1 + k) \cdot P_{sig}$$

berechnet und der Steuerung der (Förder)Abläufe auf der Fördereinrichtung zugrunde gelegt wird, wobei $P_{sig}$ die mit den Drehsignalen der Antriebe M berechnete Position des Objekts, gemessen vom Bezugspunkt Po, und $P_2$ die Position des zweiten Erfassungsbereichs, ebenfalls gemessen vom Bezugspunkt Po, bezeichnet. Auf diese Weise können Abweichungen, die relativ zu einem vom Objekt zurückgelegten Weg auftreten, berücksichtigt werden. Beispielsweise können schwere Objekte einen elastischen Belag einer Förderrolle deformieren und dadurch den wirksamen Durchmesser derselben verringern, was zu einer systematischen Abweichung zwischen der mit den Drehsignalen der Antriebe berechneten Position $P_{sig}$ und der Position $P_2$ des zweiten Erfassungsbereichs führt. Das oben zum Bezugspunkt $P_0$ Gesagte gilt hier sinngemäß.

Besonders vorteilhaft ist es auch, wenn im Schritt d) ein additiver Korrekturwert

$$d = \Delta P = P_2 - P_{sig}$$

berechnet wird und im Schritt e) die korrigierte Position

$$P_{korr} = d + P_{sig}$$

berechnet und der Steuerung der (Förder)Abläufe auf der Fördereinrichtung zugrunde gelegt wird, wobei $P_{sig}$ die mit den Drehsignalen der Antriebe berechnete Position des Objekts, gemessen vom Bezugspunkt Po, und $P_2$ die Position des zweiten Erfassungsbereichs, ebenfalls gemessen vom Bezugspunkt Po, bezeichnet. Auf diese Weise können insbesondere Abweichungen berücksichtigt werden, die von singulären Ereignissen hervorgerufen werden, beispielsweise wenn es beim Beschleunigen oder Bremsen des Objekts zu einem Rutschen oder Gleiten zwischen den Förderelementen und dem Objekt kommt. Jedoch wird angemerkt, dass ein solches Rutschen nicht auf die Korrektur mit einem additiven Korrekturwert d beschränkt ist, sondern auch mit einem Korrekturfaktor k in Verbindung gebracht werden kann, etwa wenn das Rutschen oder Gleiten nicht an einem Punkt, sondern über eine bestimmte Wegstrecke erfolgt.

Günstig ist es zudem, wenn das Objekt zwischen dem ersten Erfassungsbereich und dem zweiten Erfassungsbereich mit konstanter Geschwindigkeit bewegt wird. Auf diese Weise kann gezielt eine Abweichung zwischen der mit den Drehsignalen der Antriebe berechneten Position $P_{sig}$ und der Position $P_2$ des zweiten Erfassungsbereich ermittelt werden, die bei Bewegung des Objekts mit konstanter Geschwindigkeit auftritt.

Günstig ist es weiterhin, wenn das Objekt zwischen dem ersten Erfassungsbereich und dem zweiten Erfassungsbereich beschleunigt und/oder verzögert wird. Auf diese Weise kann gezielt eine Abweichung zwischen der mit den Drehsignalen der Antriebe berechneten Position $P_{sig}$ und der Position $P_2$ des zweiten Erfassungsbereich ermittelt werden, die beim Beschleunigen und/oder Bremsen des Objekts auftritt.

Vorteilhaft ist es auch, wenn das Objekt zwischen dem ersten Erfassungsbereich und dem zweiten Erfassungsbereich abschnittsweise mit konstanter Geschwindigkeit und abschnittsweise beschleunigt und/oder verzögert wird. Auf diese Weise können sowohl Abweichungen zwischen der mit den Drehsignalen der Antriebe berechneten Position $P_{sig}$ und der Position $P_2$ des zweiten Erfassungsbereich ermittelt werden, die aus einer Bewegung des Objekts mit konstanter Geschwindigkeit resultieren, als auch Abweichungen, die beim Beschleunigen und/oder Bremsen des Objekts auftreten.

Vorteilhaft ist es weiterhin, wenn einer Bewegung des Objekts mit konstanter Geschwindigkeit ein Korrekturfaktor k und einer Beschleunigung und/oder einer Verzögerung des Objekts ein additiver Korrekturwert d zugeordnet wird. Dadurch kann die korrigierte Position $P_{korr}$ auf sehr differenzierte Weise berechnet werden. Angemerkt wird an dieser Stelle, dass die Zuordnung einer Bewegung des Objekts mit konstanter Geschwindigkeit zu einem Korrekturfaktor k und die Zuordnung einer Beschleunigung und/oder einer Verzögerung des Objekts zu einem additiven Korrekturwert d natürlich nicht nur bei der Ermittlung des Korrekturfaktors k und des additiven Korrekturwerts d gilt, sondern auch bei der Anwendung des Korrekturfaktors k und des additiven Korrekturwerts d. Das heißt mit anderen Worten insbesondere, dass der Korrekturfaktor k zur Berechnung einer korrigierten Position $P_{korr}$ herangezogen wird, wenn das Objekt mit konstanter Geschwindigkeit bewegt wird, und der additive Korrekturwert zur Berechnung einer korrigierten Position $P_{korr}$ herangezogen wird, wenn das Objekt beschleunigt oder gebremst wird.

Besonders vorteilhaft ist es weiterhin, wenn im Schritt e) die korrigierte Position

$$P_{korr} = d + (1 + k) \cdot P_{sig}$$

berechnet und der Steuerung der (Förder)Abläufe auf der Fördereinrichtung zugrunde gelegt wird. Auf diese Weise können Abweichungen zwischen der mit den Drehsignalen der Antriebe berechneten Position $P_{sig}$ und der Position $P_2$ des zweiten Erfassungsbereich auf besonders differenzierte Weise berücksichtigt werden. An dieser Stelle wird angemerkt, dass auch verschiedene Korrekturfaktoren k und verschiedene additive Korrekturwerte d für die Berechnung der korrigierten Position $P_{korr}$ berücksichtigt werden können. Beispielsweise kann es sein, dass beim Bremsen ein anderer Korrekturfaktor k und/oder ein anderer additiver Korrekturwert d ermittelt wird als beim Beschleunigen. Auch können beispielsweise in kurvigen Förderabschnitten der Fördereinrichtung andere Korrekturfaktoren k und/oder andere additive Korrekturwerte d auftreten als in geraden Förderabschnitten. In allgemeiner Form kann die korrigierte Position $P_{korr}$ im Schritt e) also mit Hilfe der Formel

$$P_{korr} = \sum_{n=1}^{p} d_n + \left(1 + \sum_{n=1}^{q} k_n\right) \cdot P_{sig}$$

berechnet werden, wobei $d_n$ die verschiedenen additiven Korrekturwerte bezeichnet und $k_n$ die verschiedenen Korrekturfaktoren.

Schließlich ist es auch von Vorteil, wenn ein Objekt-Block, welcher mehrere dicht an dicht aufeinanderfolgende Objekte aufweist, für die Positionsbestimmung als ein einziges Objekt betrachtet wird. Auf diese Weise kann auch die Position eines Objekt-Blocks korrekt berechnet werden, beziehungsweise ist die Positionierung eines Objekt-Blocks mit höherer Genauigkeit möglich, was insbesondere in einem Staubereich von großem Vorteil ist.

An dieser Stelle wird angemerkt, dass sich die zu der vorgestellten Fördereinrichtung offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:

Fig. 1    die prinzipielle Struktur einer beispielhaften Fördereinrichtung in Draufsicht;

Fig. 2    eine weitere beispielhafte Fördereinrichtung in Seitenansicht;

Fig. 3    eine Detailansicht der Fördereinrichtung aus Fig. 2;

Fig. 4    die Fördereinrichtung aus Fig. 2 in einem Zustand, in dem sich ein Objekt auf einen ersten Erfassungsbereich an einer ersten Position zu bewegt;

Fig. 5    die Fördereinrichtung aus Fig. 2 in einem Zustand, in dem das Objekt den ersten Erfassungsbereich erreicht hat;

Fig. 6    die Fördereinrichtung aus Fig. 2 in einem Zustand, in dem das Objekt den ersten Erfassungsbereich passiert hat;

Fig. 7    die Fördereinrichtung aus Fig. 2 in einem Zustand, in dem das Objekt einen zweiten Erfassungsbereich an einer zweiten Position erreicht hat;

Fig. 8    die Fördereinrichtung aus Fig. 2 in einem Zustand, in dem das Objekt den zweiten Erfassungsbereich passiert hat;

Fig. 9    die Fördereinrichtung aus Fig. 2 in einem Zustand, in dem sich eine Gruppe von Objekten in Form eines Blocks bewegen;

Fig. 10   eine beispielhafte Fördereinrichtung mit einen Staubereich und einem vorgelagerten Messbereich;

Fig. 11   einen direkt auf Förderrollen transportierten Beutel (insbesondere einen Folienbeutel, wie zum Beispiel einen "Poylbag") und

Fig. 12   eine Detailansicht einer Fördereinrichtung mit einem Sensor mit mehreren Erfassungsbereichen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

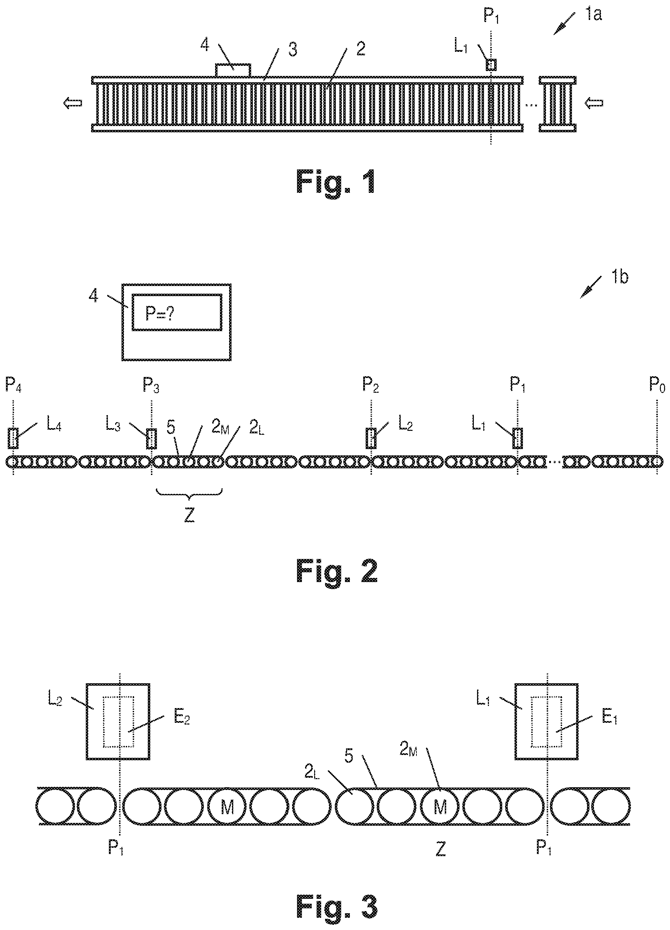

Die Fig. 1 zeigt eine beispielhafte Fördereinrichtung 1a zum Transport von Objekten in Draufsicht. Die Objekte sind beispielsweise Kartons, Behälter, Folienbeutel und dergleichen. Es werden auf der Fördereinrichtung 1a entweder dieselben Objekte oder verschiedene Objekte gefördert. Beispielsweise können in Förderrichtung aufeinander folgende Objekte Kartons und Folienbeutel sein. Die Fördereinrichtung 1a umfasst mehrere angetriebene Förderelemente 2 zum Transport der Objekte. Es können dabei einige der Förderelemente 2 angetrieben oder sämtliche Förderelemente 2 angetrieben sein. Im gezeigten Beispiel sind die Förderelemente 2 konkret als Förderrollen ausgebildet, die zwischen zwei Längsträgern 3 (Rahmenprofilen) angeordnet sind.

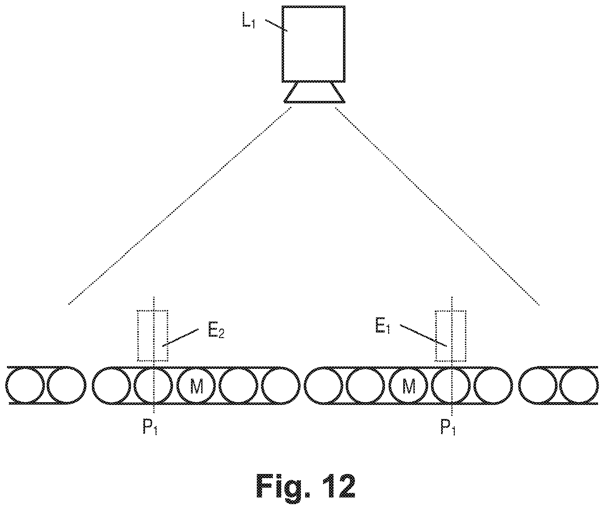

Die Fördereinrichtung 1a umfasst auch eine erste Messeinrichtung $L_1$ zum Erfassen eines Objekts an einer ersten (Mess)Position $P_1$. Die Messeinrichtung $L_1$ ist im konkret dargestellten Beispiel als Lichtschranke ausgebildet, sie könnte aber auch zum Beispiel durch eine Kamera, einen Laser-Scanner oder dergleichen gebildet sein (siehe auch Fig. 12).

Schließlich umfasst die Fördereinrichtung 1a auch eine Steuerung 4, welche im gezeigten Beispiel an einem der Längsträger 3 angeordnet und über nicht dargestellte Steuerleitungen oder einen Steuerbus mit den Förderrollen 2 steuertechnisch verbunden ist.

Die Fördereinrichtung 1a kann im Grunde beliebig lange ausgeführt werden, so wie dies mit den Punkten im rechten Bereich der Fig. 1 angedeutet ist. Zudem weist die Fördereinrichtung 1a eine (Haupt)Förderrichtung von rechts nach links auf, so wie dies mit zwei Pfeilen angedeutet ist. Positionen, die einer anderen Position in Förderrichtung nachfolgen, liegen "stromabwärts". Positionen, die in Förderrichtung vor einer anderen Position liegen, liegen "stromaufwärts".

Fig. 2 zeigt nun eine zweite beispielhafte Fördereinrichtung 1b in Seitenansicht. Die Fördereinrichtung 1b weist in diesem Beispiel mehrere Zonen Z auf, von denen jede eine motorisierte Förderrolle $2_M$ und mehrere (hier vier) nicht motorisierte Förderrollen $2_L$ umfasst, die über einen Riemen 5 von der motorisierten Förderrolle $2_M$ mit angetrieben werden. Die Zonen Z sind daher unabhängig voneinander antreibbar. Das heißt, die Fördergeschwindigkeit in der Zone Z kann unabhängig von der Fördergeschwindigkeit in den anderen Zonen Z eingestellt werden, und so weiter. Innerhalb einer Zone Z ist die Fördergeschwindigkeit jedoch gleich.

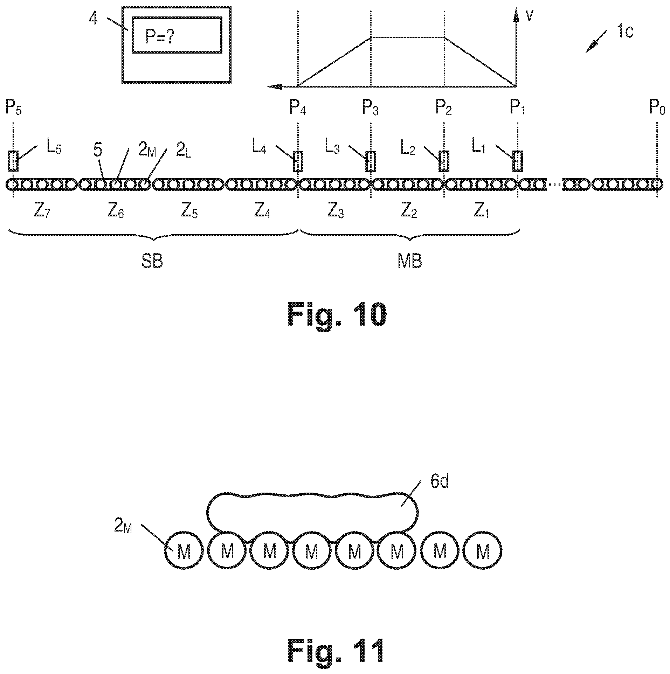

An dieser Stelle wird angemerkt, dass die Gruppierung einer motorisierten Förderrolle $2_M$ mit vier nicht motorisierten Förderrollen $2_L$ rein beispielhaft ist und die Förderrollen $2_M$, $2_L$ auch auf andere Weise gruppiert werden können. Beispielsweise wäre denkbar, dass zwei motorisierte Förderrollen $2_M$ mit fünf nicht motorisierten Förderrollen $2_L$ zu einer Gruppe und damit zu einer entsprechend größeren Zone Z zusammengefasst werden. Denkbar wäre weiterhin, dass alle Förderrollen 2 motorisiert sind und eine Gruppierung über (Übertriebs)Riemen 5 entfallen kann (vergleiche auch Fig. 11). Jede Förderrolle 2 kann dann eine Zone Z bilden. Denkbar ist natürlich auch, dass eine Zone Z ein Förderband zum Transport der Objekte umfasst, die über die Förderrollen 2 geführt ist. Daher bildet das Förderband dann in der Zone Z eine Transportfläche aus. Hingegen bilden nach den zuvor beschriebenen Ausführungen die Förderrollen 2 in der Zone Z eine Transportfläche aus, nicht aber die (Übertriebs)Riemen 5. Anstatt eines Förderbandes, kann die Zone Z auch eine Förderkette zum Transport der Objekte umfassen.

Die Fördereinrichtung 1b umfasst weiterhin vier Sensoren $L_1..L_4$, die im konkreten Beispiel als Lichtschranken ausgeführt und an vier unterschiedlichen Positionen $P_1..P_4$ angeordnet sind. Dabei befindet sich eine Position $P_2$ der zweiten Lichtschranke $L_2$ stromabwärts von der Position $P_1$ der ersten Lichtschranke Li, eine Position $P_3$ einer dritten Lichtschranke $L_3$ stromabwärts von der Position $P_2$ der zweiten Lichtschranke $L_2$ und eine Position $P_4$ einer vierten Lichtschranke $L_4$ stromabwärts von der Position $P_3$ der dritten Lichtschranke $L_3$. Stromaufwärts von der Position $P_1$ der ersten Lichtschranke $L_1$ ist in der Fig. 2 auch ein Bezugspunkt $P_0$ dargestellt, dem in diesem Beispiel kein Sensor zugeordnet ist.

Die Steuerung 4 ist in der Fig. 2 über der eigentlichen Förderbahn gezeichnet, um die darin ablaufenden Vorgänge besser darstellen zu können. Unter anderem befindet sich in der Steuerung 4 ein Speicherplatz (eine Variable) für die Objektposition P. Da sich in dem in der Fig. 2 gezeigten Zustand noch kein Objekt auf der Fördereinrichtung 1b befindet, ist die Variable unbelegt beziehungsweise undefiniert. Denkbar wäre auch, dass die Variable überhaupt erst angelegt wird, wenn ein entsprechendes Objekt in den Wirkungsbereich der Fördereinrichtung 1b gelangt, das heißt die Variable für die Objektposition P in dem in der Fig. 2 dargestellten Zustand überhaupt noch nicht existiert.

Fig. 3 zeigt einen Ausschnitt der Fördereinrichtung 1b mit der ersten Lichtschranke $L_1$ und der zweiten Lichtschranke $L_2$ in vergrößerter Darstellung. Gut erkennbar ist, dass der erste Erfassungsbereich $E_1$ eine vorgegebene Ausdehnung rund um die erste Position $P_1$ und der zweite Erfassungsbereich $E_2$ eine vorgegebene Ausdehnung rund um die zweite Position $P_2$ aufweist. Die Positionen $P_1$ und $P_2$ befinden sich jeweils in der Mitte der Erfassungsbereiche $E_1$ und $E_2$. Dies ist jedoch keine zwingende Bedingung, sondern die (Erfassungs)Positionen $P_1$ und $P_2$ könnten auch außermittig in den Erfassungsbereichen $E_1$ und $E_2$ angeordnet sein. Auch die Lage der Positionen $P_1$ und $P_2$ der Lichtschranken $L_1$ und $L_2$ zwischen zwei Zonen Z ist rein beispielhaft, und die Positionen $P_1$ und $P_2$ der Lichtschranken $L_1$ und $L_2$ könnten sich auch innerhalb einer Zone Z befinden (vergleiche auch Fig. 12). Weiterhin ist der Fig. 3 zu entnehmen, dass je ein Erfassungsbereich Ei, $E_2$ je einer Lichtschranke Li, $L_2$ zugeordnet ist. Auch dies ist keine zwingende Bedingung, sondern einem Sensor $L_1$ könnten auch mehrere Erfassungsbereiche Ei, $E_2$ zugeordnet sein (siehe Fig. 12). Schließlich zeigt die Fig. 3 auch den Aufbau einer Zone Z im Detail. Insbesondere ist dort der Antrieb (Motor) M einer der motorisierten Förderrolle $2_M$ dargestellt.

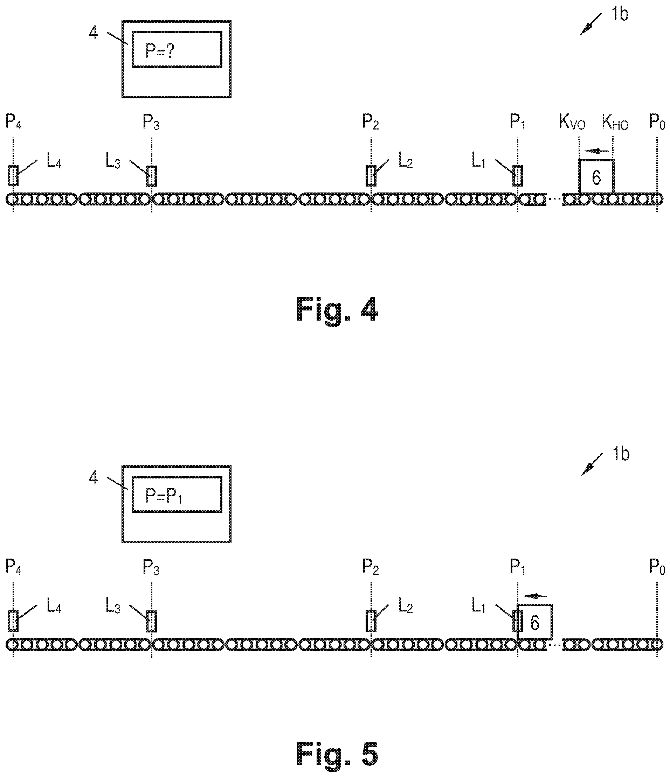

Fig. 4 zeigt die Fördereinrichtung 1b nun in einem Zustand, in welchem ein Objekt 6 in Richtung der ersten Lichtschranke $L_1$ transportiert wird. Eine Bewegung des Objekts 6 wird dabei mit einem über dem Objekt 6 gezeichneten Pfeil symbolisiert. Das Objekt 6 weist eine Objekt-Vorderkante Kvo auf sowie eine Objekt-Hinterkante $K_{HO}$, die stromaufwärts zur Objekt-Vorderkante Kvo angeordnet ist. Es wird angenommen, dass der Steuerung 4 die Position des Objekts 6 zum gegebenen Zeitpunkt noch nicht bekannt ist (z.B. kann diese an einem Wareneingang vor der ersten Erfassung eines Objekts 6 zutreffen).

Zu einem in der Fig. 5 dargestellten Zeitpunkt hat das Objekt 6 mit seiner Obj ekt-Vorderkante Kvo die erste Lichtschranke $L_1$ erreicht. Zu diesem Zeitpunkt wird auch die Position P1 der ersten Lichtschranke $L_1$ als Position P des Objekts 6 in die Steuerung 4 übernommen.

An dieser Stelle wird angemerkt, dass die Position Pi, $P_2$ eines Erfassungsbereichs Ei, $E_2$ im gezeigten Beispiel der Position Pi, $P_2$ einer Lichtschranke Li, $L_2$ entspricht. In den in den Figuren 4 bis 10 dargestellten Beispielen kann die Position Pi, $P_2$ einer Lichtschranke Li, $L_2$ daher als Synonym für die Position Pi, $P_2$ eines Erfassungsbereichs Ei, $E_2$ gebraucht werden.

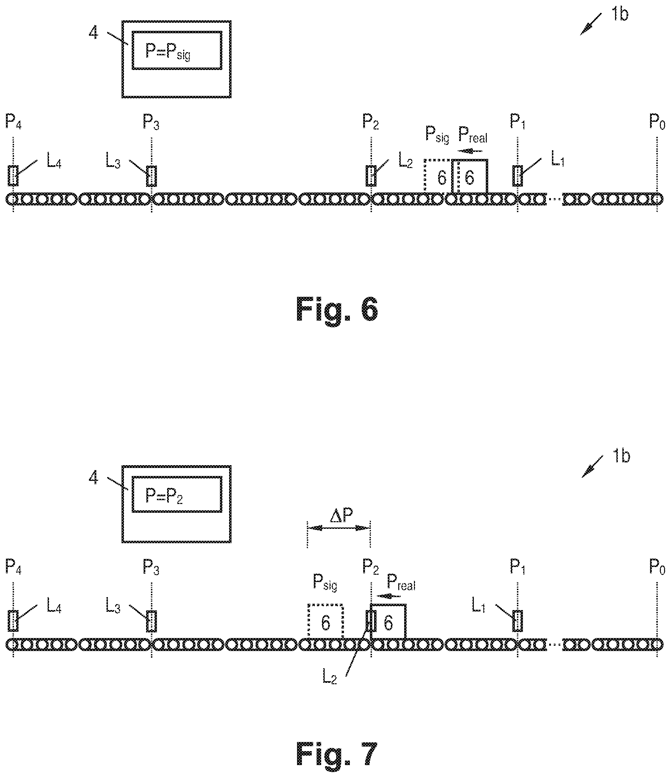

Während einer Förderbewegung des Objekts 6 - in der (Haupt)Förderrichtung - von der ersten Lichtschranke $L_1$ weg, wird die Position $P_{sig}$ des Objekts 6 mit Hilfe von Drehsignalen der Antriebe M der Förderrollen $2_M$ ermittelt. Beispielsweise werden dazu die Signale eines mit der Förderrolle 2, $2_M$, $2_L$ gekoppelten Drehgebers oder die Signale eines Hall-Sensors des Antriebsmotors M der Förderrolle $2_M$ ausgewertet. Über diese Signale können die Stellung der Förderrolle 2, $2_M$, $2_L$, die Drehzahl der Förderrolle 2, $2_M$, $2_L$ und die Anzahl der Drehungen der Förderrolle 2, $2_M$, $2_L$, die sie seit einem bestimmten Zeitpunkt vollführt hat, ermittelt werden. Die Anzahl der Drehungen der Förderrolle 2, $2_M$, $2_L$ multipliziert mit dem Umfang der Förderrolle 2, $2_M$, $2_L$ ergibt die (theoretische) Position des Objekts 6 gerechnet von der ersten Position $P_1$. Wie aus der Fig. 6 erkennbar ist, stimmt die mit den Drehsignalen berechnete Position $P_{sig}$ (strichliert dargestellt) nicht genau mit der tatsächlichen Position Preai (mit durchgehenden Linien dargestellt) des Objekts 6 auf der Fördereinrichtung 1b überein.

Zu einem in der Fig. 7 dargestellten Zeitpunkt hat das Objekt 6 mit seiner Obj ekt-Vorderkante Kvo die zweite Lichtschranke $L_2$ erreicht. Zu diesem Zeitpunkt wird auch die Position $P_2$ der zweiten Lichtschranke $L_2$ als Position P des Objekts 6 in die Steuerung 4 übernommen. Desweiteren wird eine Abweichung $\Delta P$ zwischen der mit den Drehsignalen der Antriebe M berechneten Position $P_{sig}$ und der Position $P_2$ der zweiten zweite Lichtschranke $L_2$ ermittelt und in Folge für die Berechnung einer korrigierten Position $P_{korr}$ des Objekts 6 mit Hilfe der Drehsignale der Antriebe M herangezogen.

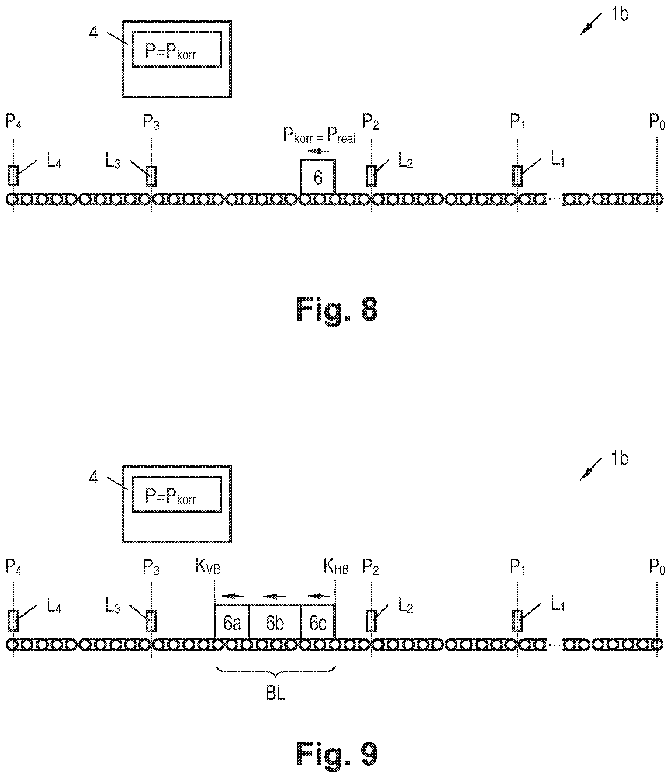

In Fig. 8 ist ein entsprechender Zustand, in dem sich das Objekt 6 von der zweiten Lichtschranke $L_2$ wegbewegt, dargestellt. Zu diesem Zeitpunkt entspricht die in der Steuerung 4 vorhandene korrigierte Position $P_{korr}$ weitestgehend der realen Position Preai des Objekts 6. Zusammenfassend werden bei dem Verfahren zur Positionsbestimmung des Objekts 6 also folgende Schritte ausgeführt:

a) Setzen eines Positionswertes P, welcher dem Objekt 6 in einer Steuerung 4 der Fördereinrichtung 1b zugeordnet ist, auf die Position $P_1$ eines ersten Erfassungsbereichs $E_1$ eines an der Fördereinrichtung 6 ortsfest installierten, ersten Sensors Li, wenn das Objekt 6 im ersten Erfassungsbereich $E_1$ detektiert wird (siehe Fig. 5),

b) Berechnen einer Position $P_{sig}$ des Objekts 6 mit Hilfe von Drehsignalen von Antrieben M für Förderelemente 2, $2_M$, $2_L$ der Fördereinrichtung 1b ausgehend von der Position $P_1$ des ersten Erfassungsbereichs $E_1$ während einer (Förder)Bewegung des Objekts 6 - in (Haupt)Förderrichtung - vom ersten Erfassungsbereich $E_1$ weg (siehe Fig. 6),

c) Setzen des Positionswertes P, welcher dem Objekt 6 in der Steuerung 4 der Fördereinrichtung 1b zugeordnet ist, auf die Position $P_2$ eines zweiten Erfassungsbereichs $E_2$ eines an der Fördereinrichtung 1b ortsfest installierten, zweiten Sensors $L_2$, wenn das Objekt 6 im zweiten Erfassungsbereich $E_2$ detektiert wird (siehe Fig. 7),

d) Ermitteln einer Abweichung $\Delta P$ zwischen der mit den Drehsignalen der Antriebe M berechneten Position $P_{sig}$ und der Position $P_2$ des zweiten Erfassungsbereichs $E_2$ nachdem das Objekt 6 im zweiten Erfassungsbereich $E_2$ detektiert wurde (siehe Fig. 7), und

e) Nutzen der ermittelten Abweichung $\Delta P$ für die Berechnung einer korrigierten Position $P_{korr}$ des Objekts 6 mit Hilfe der Drehsignale der Antriebe M während einer (Förder)Bewegung des Objekts 6 - in (Haupt)Förderrichtung - vom zweiten Erfassungsbereich $E_2$ weg (siehe Fig. 8).

Die Berechnung der korrigierten Position $P_{korr}$ des Objekts 6 kann insbesondere dadurch erfolgen, dass im Schritt d) ein Korrekturfaktor

$$k = \frac{\Delta P}{P_{Sig}} = \frac{P_2 - P_{sig}}{P_{Sig}}$$

berechnet wird und im Schritt e) die korrigierte Position

$$P_{korr} = (1 + k) \cdot P_{sig}$$

berechnet und der Steuerung der Abläufe auf der Fördereinrichtung 1b zugrunde gelegt wird, wobei $P_{sig}$ die mit den Drehsignalen der Antriebe M berechnete Position des Objekts 6, gemessen vom Bezugspunkt Po, und $P_2$ die Position des zweiten Erfassungsbereichs $E_2$, ebenfalls gemessen vom Bezugspunkt Po, bezeichnet.

Die im Schritt d) ermittelte Abweichung $\Delta P$ wird

in diesem Fall also auf die Distanz zwischen dem Bezugspunkt $P_0$ und der mit den Drehsignalen der Antriebe M berechneten Position $P_{sig}$ des Objekts 6 bezogen, und die Korrektur in Schritt e) erfolgt relativ zu dem vom Objekt 6 zurückgelegten Weg ausgehend vom zweiten Erfassungsbereich $E_2$.

Alternativ kann die Berechnung der korrigierten Position $P_{korr}$ des Objekts 6 insbesondere auch dadurch erfolgen, dass im Schritt d) ein additiver Korrekturwert

$$d = \Delta P = P_2 - P_{sig}$$

berechnet wird und im Schritt e) die korrigierte Position

$$P_{korr} = d + P_{sig}$$

berechnet und der Steuerung der Abläufe auf der Fördereinrichtung 6 zugrunde gelegt wird, wobei $P_{sig}$ wiederum die mit den Drehsignalen der Antriebe M berechnete Position des Objekts 6, gemessen vom Bezugspunkt Po, und $P_2$ die Position des zweiten Erfassungsbereichs $E_2$, ebenfalls gemessen vom Bezugspunkt Po, bezeichnet.

Denkbar wäre auch eine Kombination beider Möglichkeiten, wobei im Schritt e) die korrigierte Position

$$P_{korr} = d + (1 + k) \cdot P_{sig}$$

berechnet und der Steuerung der Abläufe auf der Fördereinrichtung 1b zugrunde gelegt wird.

Besonders vorteilhaft ist es dabei, wenn einer Bewegung des Objekts 6 mit konstanter Geschwindigkeit v ein Korrekturfaktor k und einer Beschleunigung und/oder einer Verzögerung des Objekts 6 ein additiver Korrekturwert d zugeordnet wird. Die Erfahrung hat gezeigt, dass die korrigierte Position $P_{korr}$ dann besonders gut der realen Position $P_{real}$ entspricht.

Der oben genannte Bezugspunkt $P_0$ kann grundsätzlich irgendwo auf der Fördereinrichtung 1b liegen und bezeichnet die Null-Position für die Positionsbestimmung. Am Bezugspunkt $P_0$ weist das Objekt 6 somit die Position P=0 auf. Am Bezugspunkt $P_0$ kann ein Erfassungsbereich angeordnet sein, dies ist aber keine zwingende Bedingung. Der Bezugspunkt $P_0$ kann auch mit einer der Positionen $P_1..P_4$ der Lichtschranken $L_1..L_4$ beziehungsweise der Erfassungsbereiche Ei, $E_2$ übereinstimmen.

Das anhand der Figuren 4 bis 8 erläuterte Verfahren kann rekursiv ablaufen. Dabei wird die Position P des Objekts 6 bei einer weiteren Bewegung in der schon beschriebenen Weise bei der dritten Lichtschranke $L_3$ und/oder bei der vierten Lichtschranke $L_4$ korrigiert.

Konkret werden die Schritte b) bis e) rekursiv wiederholt, wobei der zweite Erfassungsbereich $E_2$ an die Stelle des ersten Erfassungsbereichs $E_1$ tritt, und bei

einem neuerlichen Durchlauf des Schritts c) ein weiterer Erfassungsbereich des an der Fördereinrichtung 1b ortsfest installierten, dritten Sensors $L_3$ an die Stelle des zweiten Erfassungsbereichs $E_2$ tritt, und so weiter. Denkbar wäre aber auch, dass die Rolle des ersten Erfassungsbereichs $E_1$ im Verfahrensablauf beibehalten wird und lediglich ein weiterer Erfassungsbereich des an der Fördereinrichtung 1b ortsfest installierten, dritten Sensors $L_3$ bei einem neuerlichen Durchlauf des Schritts c) an die Stelle des zweiten Erfassungsbereichs $E_2$ tritt. In diesem Fall wird eine Abweichung $\Delta P$ zwischen der mit den Drehsignalen der Antriebe M berechneten Position $P_{sig}$ und der zweiten Position $P_2$ stets auf die zum ersten Erfassungsbereichs $E_1$ gemessene Entfernung bezogen. Die Berechnung einer korrigierten Position $P_{korr}$ des Objekts 6 mit Hilfe der Drehsignale der Antriebe M ist dann besonders genau. Diese Variante eignet sich insbesondere für Fördereinrichtungen 1b die sich von ihrer Art her im Transportverlauf der Objekte 6 nicht oder nur wenig verändern. Beispielsweise ist eine solche Fördereinrichtungen 1b nur aus geraden Förderabschnitten aufgebaut. Die erste Variante eignet sich dagegen im Besonderen für Fördereinrichtungen 1b, die sich von ihrer Art her im Transportverlauf der Objekte 6 stark verändern. Beispielsweise umfasst eine solche Fördereinrichtungen 1b kurvige Förderabschnitte, gerade Förderabschnitte, Abzweigungen und dergleichen.

Die Fig. 9 zeigt nun ein Beispiel, bei dem ein Objekt-Block BL, welcher mehrere dicht an dicht aufeinanderfolgende Objekte 6a..6c aufweist, über die Fördereinrichtung 1b transportiert wird. Für die Positionsbestimmung wird dieser Objekt-Block BL als ein einziges Objekt 6 betrachtet. Ansonsten wird das oben beschriebene Verfahren in der bereits beschriebenen Weise ausgeführt.

An dieser Stelle wird auch angemerkt, dass das vorgestellte Verfahren ohne explizite Vorgabe einer Soll-Position für das Objekt 6, 6a..6c ausgeführt werden kann. In diesem Fall ist die Steuerung 4 rein beobachtend. Selbstverständlich kann die korrigierte Position $P_{korr}$ aber auch im Rahmen einer Positionsregelung genutzt werden, also auch dann, wenn seitens der Steuerung 4 eine Soll-Position für das Objekt 6, 6a..6c vorgegeben wird. Von besonderer Bedeutung ist dieser Aspekt in einem Staubereich SB, also in einem Bereich, in dem besonders viele Objekte 6, 6a..6c mit besonders geringem Abstand zueinander oder überhaupt dicht an dicht angehalten werden. Vorteilhaft ist es demzufolge, wenn das beschriebene Verfahren in oder vor einem Staubereich SB für die auf der Fördereinrichtung 1b geförderten Objekte 6, 6a..6c ausgeführt wird.

Im Falle einer Positionsregelung für die Objekte 6, 6a..6c bilden die Förderelemente 2, $2_M$, $2_L$ beziehungsweise deren Antriebe M die Stellglieder des Regelkreises, und die Steuerung 4 übernimmt oder umfasst die Funktion des (Positions)Reglers (closed loop control). Andere Regelkreise, wie zum Beispiel zur Regelung einer Drehzahl und/oder eines Antriebsmoments einer Förderrolle 2, 2$_M$, 2$_L$ sind natürlich zusätzlich oder alternativ möglich.

Die Fig. 10 zeigt ein Beispiel, bei dem eine Fördereinrichtung 1c einen Staubereich SB und einen dazu stromaufwärts angeordneten Messbereich MB aufweist. Der Messbereich MB umfasst in diesem Beispiel die Zonen Z$_1$..Z$_3$, der Staubereich SB die Zonen Z$_4$..Z$_7$. Im Messbereich MB sind zudem vier Lichtschranken L$_1$..L$_4$ angeordnet, im Staubereich eine weitere, fünfte Lichtschranke L$_5$.

Um eine besonders genaue Berechnung einer korrigierten Position P$_{korr}$ eines Objekts 6, 6a..6c zu ermöglichen, wird das Objekt 6, 6a..6c mit einem besonderen Geschwindigkeitsprofil durch den Messbereich MB bewegt. Konkret wird das Objekt 6, 6a..6c in der ersten Zone Z$_1$ konstant beschleunigt, wodurch die Geschwindigkeit v des Objekts 6, 6a..6c linear ansteigt, in der zweiten Zone Z$_2$ mit konstanter Geschwindigkeit v bewegt und in der dritten Zone Z$_3$ schließlich konstant verzögert, wodurch die Geschwindigkeit v des Objekts 6, 6a..6c linear sinkt. Dadurch können ein Korrekturfaktor k und ein additiver Korrekturwert d besonders differenziert und genau bestimmt werden. Dadurch ist die Positionierung der Objekte 6, 6a..6c im nachfolgenden Staubereich SB mit besonders hoher Genauigkeit möglich. Beispielsweise kann ein Objekt 6, 6a..6c mit seiner Objekt-Vorderkante Kvo genau an einer Vorderkante einer Zone Z$_1$..Z$_4$ oder mit seiner Objekt-Hinterkante K$_{HO}$ genau an einer Hinterkante einer Zone Z$_1$..Z$_4$ angehalten werden, wodurch die Bildung eines Objekt-Blocks BL möglich ist, in dem kein oder nur geringer Staudruck herrscht. Dies ist insbesondere für das Stauen von empfindlichen Objekten 6, 6a..6c von Bedeutung. Grundsätzlich kann die Anwendung eines Messbereichs MB auf einer Fördereinrichtung 1c aber auch unabhängig von einem Staubereich SB sinnvoll sein, beispielsweise an einem Wareneingang eines Lager- und Kommissioniersystems.

In diesem Zusammenhang wird auch angemerkt, dass obwohl in den vorangehenden Beispielen stets die Objekt-Vorderkante Kvo für das vorgestellte Verfahren herangezogen wurde, völlig gleichwertig auch die Objekt-Hinterkante K$_{HO}$ dafür genutzt werden kann. Demzufolge werden die entsprechenden Verfahrensschritte ausgelöst, wenn die Objekt-Hinterkante K$_{HO}$ des Objekts 6, 6a..6c die Erfassungsbereiche Ei, E$_2$ erreicht beziehungsweise passiert.

Weiterhin ist es natürlich auch möglich, die Objekt-Länge eines Objekts 6 zu ermitteln und der beschriebenen Korrektur zu unterwerfen. Die Objekt-Länge eines Objekts 6, 6a..6c ist die Distanz zwischen Objekt-Vorderkante Kvo und Objekt-Hinterkante K$_{HO}$. Demzufolge ist die korrigierte Objekt-Länge eines Objekts 6, 6a..6c die Distanz zwischen der korrigierten Position P$_{korr}$ der Objekt-Vorderkante Kvo und der korrigierten Position P$_{korr}$ der Objekt-Hinterkante K$_{HO}$.

Angemerkt wird zudem, dass die Zuordnung einer Bewegung des Objekts 6, 6a..6c mit konstanter Geschwindigkeit v zu einem Korrekturfaktor k und die Zuordnung einer Beschleunigung und/oder einer Verzögerung des Objekts 6, 6a..6c zu einem additiven Korrekturwert d natürlich nicht nur bei der Ermittlung des Korrekturfaktors k und des additiven Korrekturwerts d gilt, sondern auch bei der Anwendung des Korrekturfaktors k und des additiven Korrekturwerts d. Das heißt mit anderen Worten insbesondere, dass der Korrekturfaktor k zur Berechnung einer korrigierten Position P$_{korr}$ herangezogen wird, wenn das Objekt 6, 6a..6c mit konstanter Geschwindigkeit v bewegt wird, und der additiven Korrekturwert d zur Berechnung einer korrigierten Position P$_{korr}$ herangezogen wird, wenn das Objekt 6, 6a..6c mit beschleunigt oder gebremst wird.

Im Besonderen wird auch angemerkt, dass unterschiedliche Korrekturfaktoren k und unterschiedliche additive Korrekturwerte d für die Berechnung einer korrigierten Position P$_{korr}$ herangezogen werden können. Beispielsweise kann für das Bremsen ein anderer Korrekturfaktor k und/oder ein anderer additiver Korrekturwert d ermittelt werden als beim Beschleunigen.

Auch können beispielsweise in kurvigen Förderabschnitten der Fördereinrichtung 1a..1c andere Korrekturfaktoren k und/oder andere additive Korrekturwerte d auftreten als in geraden Förderabschnitten. In allgemeiner Form kann die korrigierte Position P$_{korr}$ im Schritt e) also mit Hilfe der Formel

$$P_{korr} = \sum_{n=1}^{p} d_n + \left(1 + \sum_{n=1}^{q} k_n\right) \cdot P_{sig}$$

berechnet werden, wobei d$_n$ die verschiedenen additiven Korrekturwerte bezeichnet und k$_n$ die verschiedenen Korrekturfaktoren.

Es ist weiterhin zu beachten, dass eine Trennung des Messbereichs MB und/oder des Staubereichs SB in mehrere Zonen Z$_1$..Z$_7$ zwar möglich aber nicht zwingend ist. Denkbar ist, dass insbesondere der Messbereich MB nur eine einzige Zone Z aufweist. Die Bewegung des Objekts 6 das beispielhaft dargestellten Geschwindigkeitsprofils wäre aber dennoch möglich. Denkbar wäre weiterhin, dass der Messbereich MB und/oder der Staubereich SB mehr oder weniger Zonen Z$_1$..Z$_7$ als dargestellt aufweist.

In einer weiteren vorteilhaften Variante ist vor dem Messbereich MB ein optionaler Ausrichtbereich angeordnet, um die Objekte 6 in definierter Ausrichtung an den Messbereich MB übergeben zu können. Beispielsweise weist der Ausrichtbereich schräg gestellte Ausrichtrollen auf, die dafür sorgen, dass das Objekt 6 den nachfolgenden Messbereich MB in einer vordefinierten Ausrichtung erreicht, nämlich indem eine Seitenkante des Objekts 6 mit einem der Längsträger 3 ausgerichtet wird. Es sind aber natürlich auch andere Methoden zur Ausrichtung des Objekts 6 möglich.

Untersuchungen haben gezeigt, dass die beschriebenen Probleme insbesondere auftreten, wenn Beutel ohne Ladehilfsmittel direkt auf Förderrollen 2, $2_M$, $2_L$ transportiert werden, so wie das in der Fig. 11 beispielhaft dargestellt ist. Aus der Fig. 11 wird klar, dass selbst bei genauester Kenntnis der Durchmesser der Förderrollen eine Berechnung des vom Objekt 6d zurückgelegten Wegs mit Hilfe der Drehsignale der Antriebe M kaum möglich ist, da sich die äußere Oberfläche des Beutels 6d teilweise um die Förderrollen $2_M$ herumschlingt und die im Inneren des Beutels 6d befindliche Ware diese Bewegung nicht zwangsläufig mit vollführt. Es kommt daher zu einer dynamischen Verschiebung zwischen dem Beutel 6d und der damit transportierten Ware, die zu deutlichen systematischen Abweichungen $\Delta P$ zwischen der mit den Drehsignalen der Antriebe M berechneten Position $P_{sig}$ und der realen Position $P_{real}$ führt. Demzufolge ist es von besonderem Vorteil, wenn die Berechnung einer korrigierten Position $P_{korr}$ für diese Beutel 6d ausgeführt wird.

Die Messeinrichtungen $L_1..L_5$ sind in den oben beschriebenen Beispielen stets als Lichtschranke ausgebildet. Dies ist aber keine zwingende Bedingung, und eine Messeinrichtung $L_1$ könnte aber auch zum Beispiel durch eine Kamera, einen Laser-Scanner oder dergleichen gebildet sein, so wie das in der Fig. 12 beispielhaft dargestellt ist. Aus der Fig. 12 wird auch deutlich, dass einer Messeinrichtung $L_1$ mehrere Erfassungsbereiche Ei, $E_2$ zugeordnet sein können. Beispielsweise werden verschiedene Bildbereiche der Kamera oder des Laser-Scanners als Erfassungsbereiche Ei, $E_2$ definiert. Aus der Fig. 12 ist auch erkennbar, dass ein Erfassungsbereich Ei, $E_2$ nicht zwingend zwischen zwei Zonen Z liegen muss, sondern auch innerhalb einer Zone Z liegen kann. Selbstverständlich gilt dies auch, wenn eine Messeinrichtung $L_1..L_5$ als Lichtschranke ausgebildet ist.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

**Bezugszeichenaufstellung**

| 1a..1c | Fördereinrichtung |
|---|---|
| 2 | Förderelement (Förderrolle) |
| $2_M$ | motorisiertes Förderelement (Förderrolle) |
| $2_L$ | nicht motorisiertes Förderelement (Förderrolle) |
| 3 | Längsträger |
| 4 | Steuerung |
| 5 | Riemen / Förderband |
| 6, 6a..6d | Objekt |
| $L_1..L_5$ | Sensor (Lichtschranke) |
| M | Antrieb für ein Förderelement |
| BL | Objekt-Block |
| Ei, $E_2$ | Erfassungsbereich |
| SB | Staubereich |
| MB | Messbereich |
| Z, $Z_1..Z_7$ | Zone |
| P | Objektposition in der Steuerung |
| $P_0$ | Bezugspunkt |
| $P_1..P_5$ | Position des Erfassungsbereichs |
| $P_{sig}$ | Objektposition (mit Drehsignalen von Antrieben M berechnet) |
| $P_{korr}$ | korrigierte Objektposition (mit Drehsignalen von Antrieben M berechnet) |
| Preai | tatsächliche Objektposition |
| $\Delta P$ | Positions-Abweichung |
| Kvo | Objekt-Vorderkante |
| $K_{HO}$ | Objekt-Hinterkante |
| $K_{VB}$ | Block-Vorderkante |
| $K_{HB}$ | Block-Hinterkante |
| v | Geschwindigkeit |

**Patentansprüche**

1. Verfahren zur Positionsbestimmung eines Objekts (6, 6a..6d), das auf einer Fördereinrichtung 1a.. 1c) durch Förderelemente (2, $2_M$, $2_L$) gefördert wird, umfassend die Schritte

a) Setzen eines Positionswertes (P), welcher dem Objekt (6, 6a..6d) in einer Steuerung (4) der Fördereinrichtung (1a..1c) zugeordnet ist, auf die Position ($P_1$) eines ersten Erfassungsbereichs ($E_1$) eines an der Fördereinrichtung (6, 6a..6d) ortsfest installierten, ersten Sensors ($L_1$), wenn das Objekt (6, 6a..6d) im ersten Erfassungsbereich ($E_1$) detektiert wird,

b) Berechnen einer Position ($P_{sig}$) des Objekts (6, 6a..6d) mit Hilfe von Drehsignalen von Antrieben (M) für die Förderelemente (2, $2_M$, $2_L$) der Fördereinrichtung 1a.. 1c) ausgehend von der Position ($P_1$) des ersten Erfassungsbereichs ($E_1$) während einer Bewegung des Objekts (6, 6a..6d) vom ersten Erfassungsbereich ($E_1$) weg und

c) Setzen des Positionswertes (P), welcher dem Objekt (6, 6a..6d) in der Steuerung (4) der Fördereinrichtung (1a..1c) zugeordnet ist, auf die

Position ($P_2$) eines zweiten Erfassungsbereichs ($E_2$) des ersten Sensors (Li) oder eines an der Fördereinrichtung (1a..1c) ortsfest installierten, zweiten Sensors ($L_2$), wenn das Objekt (6, 6a..6d) im zweiten Erfassungsbereich ($E_2$) detektiert wird,

**dadurch gekennzeichnet, dass**

d) eine Abweichung ($\Delta P$) zwischen der mit den Drehsignalen der Antriebe (M) berechneten Position ($P_{sig}$) und der Position ($P_2$) des zweiten Erfassungsbereichs ($E_2$) ermittelt wird nachdem das Objekt (6, 6a..6d) im zweiten Erfassungsbereich ($E_2$) detektiert wurde, und
e) die ermittelte Abweichung ($\Delta P$) für die Berechnung einer korrigierten Position ($P_{korr}$) des Objekts (6, 6a..6d) mit Hilfe der Drehsignale der Antriebe (M) während einer Bewegung des Objekts (6, 6a..6d) vom zweiten Erfassungsbereich ($E_2$) weg herangezogen wird.

2. Verfahren nach Anspruch 1, **dadurch gekennzeichnet, dass** die Schritte b) bis e) rekursiv wiederholt werden, wobei bei einem neuerlichen Durchlauf des Schritts c) ein weiterer Erfassungsbereich des ersten Sensors (Li) oder zweiten Sensors ($L_2$) oder eines an der Fördereinrichtung (1a..1c) ortsfest installierten, dritten Sensors ($L_3$) an die Stelle des zweiten Erfassungsbereichs ($E_2$) tritt.

3. Verfahren nach Anspruch 1, **dadurch gekennzeichnet, dass** die Schritte b) bis e) rekursiv wiederholt werden, wobei der zweite Erfassungsbereich ($E_2$) an die Stelle des ersten Erfassungsbereichs ($E_1$) tritt, und bei einem neuerlichen Durchlauf des Schritts c) ein weiterer Erfassungsbereich des ersten Sensors (Li) oder zweiten Sensors ($L_2$) oder eines an der Fördereinrichtung (1a..1c) ortsfest installierten, dritten Sensors ($L_3$) an die Stelle des zweiten Erfassungsbereichs ($E_2$) tritt.

4. Verfahren nach einem der Ansprüche 1 bis 3, **dadurch gekennzeichnet, dass** die in Schritt d) ermittelte Abweichung ($\Delta P$) auf die Distanz zwischen einem Bezugspunkt ($P_0$) und der mit den Drehsignalen der Antriebe (M) berechneten Position ($P_{sig}$) des Objekts (6, 6a..6d) bezogen wird und die Korrektur in Schritt e) relativ zu dem vom Objekt (6, 6a..6d) zurückgelegten Weg ausgehend vom zweiten Erfassungsbereich ($E_2$) erfolgt.

5. Verfahren nach Anspruch 4, **dadurch gekennzeichnet, dass** im Schritt d) ein Korrekturfaktor

$$k = \frac{\Delta P}{P_{Sig}} = \frac{P_2 - P_{sig}}{P_{Sig}}$$

berechnet wird und im Schritt e) die korrigierte Position

$$P_{korr} = (1 + k) \cdot P_{sig}$$

berechnet und der Steuerung der Abläufe auf der Fördereinrichtung (1a..1c) zugrunde gelegt wird, wobei ($P_{sig}$) die mit den Drehsignalen der Antriebe (M) berechnete Position des Objekts (6, 6a..6d), gemessen vom Bezugspunkt (Po), und ($P_2$) die Position des zweiten Erfassungsbereichs ($E_2$), ebenfalls gemessen vom Bezugspunkt (Po), bezeichnet.

6. Verfahren nach einem der Ansprüche 1 bis 3, **dadurch gekennzeichnet, dass** im Schritt d) ein additiver Korrekturwert

$$d = \Delta P = P_2 - P_{sig}$$

berechnet wird und im Schritt e) die korrigierte Position

$$P_{korr} = d + P_{sig}$$

berechnet und der Steuerung der Abläufe auf der Fördereinrichtung (6, 6a..6d) zugrunde gelegt wird, wobei ($P_{sig}$) die mit den Drehsignalen der Antriebe (M) berechnete Position des Objekts (6, 6a..6d), gemessen vom Bezugspunkt (Po), und ($P_2$) die Position des zweiten Erfassungsbereichs ($E_2$), ebenfalls gemessen vom Bezugspunkt (Po), bezeichnet.

7. Verfahren nach einem der Ansprüche 1 bis 6, **dadurch gekennzeichnet, dass** das Objekt (6, 6a..6d) zwischen dem ersten Erfassungsbereich ($E_1$) und dem zweiten Erfassungsbereich ($E_2$) mit konstanter Geschwindigkeit (v) bewegt wird.

8. Verfahren nach einem der Ansprüche 1 bis 6, **dadurch gekennzeichnet, dass** das Objekt (6, 6a..6d) zwischen dem ersten Erfassungsbereich ($E_1$) und dem zweiten Erfassungsbereich ($E_2$) beschleunigt und/oder verzögert wird.

9. Verfahren nach einem der Ansprüche 1 bis 6, **dadurch gekennzeichnet, dass** das Objekt (6, 6a..6d) zwischen dem ersten Erfassungsbereich ($E_1$) und dem zweiten Erfassungsbereich ($E_2$) abschnittsweise mit konstanter Geschwindigkeit (v) und abschnittsweise beschleunigt und/oder verzögert wird.

10. Verfahren nach einem der Ansprüche 1 bis 9, **dadurch gekennzeichnet, dass** einer Bewegung des Objekts (6, 6a..6d) mit konstanter Geschwindigkeit (v) ein Korrekturfaktor k und einer Beschleunigung und/oder einer Verzögerung des Objekts (6, 6a..6d) ein additiver Korrekturwert d zugeordnet wird.

11. Verfahren nach Anspruch 5 und 6, **dadurch gekennzeichnet, dass** im Schritt e) die korrigierte Position

$$P_{korr} = d + (1 + k) \cdot P_{sig}$$

berechnet und der Steuerung der Abläufe auf der Fördereinrichtung (1a..1c) zugrunde gelegt wird.

12. Verfahren nach einem der Ansprüche 1 bis 11, **dadurch gekennzeichnet, dass** ein Objekt-Block (BL), welcher mehrere dicht an dicht aufeinanderfolgende Objekte (6a..6c) aufweist, für die Positionsbestimmung als ein einziges Objekt (6, 6d) betrachtet wird.

13. Verfahren nach einem der Ansprüche 1 bis 12, **dadurch gekennzeichnet, dass** die auf der Fördereinrichtung (1a..1c) geförderten Objekte (6, 6a..6d) verformbare Beutel umfassen, welche direkt auf Förderelementen (2, $2_M$, $2_L$) gefördert werden, welche als Förderrollen ausgebildet sind, und die Berechnung einer korrigierten Position ($P_{korr}$) für diese Beutel ausgeführt wird.

14. Verfahren nach einem der Ansprüche 1 bis 13, **dadurch gekennzeichnet, dass** dieses in oder vor einem Staubereich (SB) für die auf der Fördereinrichtung 1a.. 1c) geförderten Objekte (6, 6a..6d) ausgeführt wird.

15. Fördereinrichtung (1a..1c) mit einer Steuerung (4) zur Positionsbestimmung eines auf der Fördereinrichtung (1a..1c) durch Förderelemente (2, $2_M$, $2_L$) geförderten Objekts (6, 6a..6d), wobei die Steuerung (4) dazu ausgebildet ist

a) einen Positionswert (P), welcher dem Objekt (6, 6a..6d) in der Steuerung (4) der Fördereinrichtung (1a..1c) zugeordnet ist, auf die Position ($P_1$) eines ersten Erfassungsbereichs ($E_1$) eines an der Fördereinrichtung (6, 6a..6d) ortsfest installierten, ersten Sensors (Li) zu setzen, wenn das Objekt (6, 6a..6d) im ersten Erfassungsbereich ($E_1$) detektiert wird,
b) eine Position ($P_{sig}$) des Objekts (6, 6a..6d) mit Hilfe von Drehsignalen von Antrieben (M) für die Förderelemente (2, $2_M$, $2_L$) der Fördereinrichtung (1a..1c) ausgehend von der Position ($P_1$) des ersten Erfassungsbereichs ($E_1$) während einer Bewegung des Objekts (6, 6a..6d) vom ersten Erfassungsbereich ($E_1$) weg zu berechnen und
c) den Positionswert (P), welcher dem Objekt (6, 6a..6d) in der Steuerung (4) der Fördereinrichtung (1a..1c) zugeordnet ist, auf die Position ($P_2$) eines zweiten Erfassungsbereichs ($E_2$) des ersten Sensors (Li) oder eines an der Fördereinrichtung (1a..1c) ortsfest installierten, zweiten Sensors ($L_2$) zu setzen, wenn das Objekt (6, 6a..6d) im zweiten Erfassungsbereich ($E_2$) detektiert wird,

**dadurch gekennzeichnet, dass**

die Steuerung (4) zusätzlich dazu ausgebildet ist

d) eine Abweichung ($\Delta$P) zwischen der mit den Drehsignalen der Antriebe (M) berechneten Position ($P_{sig}$) und der Position ($P_2$) des zweiten Erfassungsbereichs ($E_2$) zu ermitteln, nachdem das Objekt (6, 6a..6d) im zweiten Erfassungsbereich ($E_2$) detektiert wurde, und
e) die ermittelte Abweichung ($\Delta$P) für die Berechnung einer korrigierten Position ($P_{korr}$) des Objekts (6, 6a..6d) mit Hilfe der Drehsignale der Antriebe (M) während einer Bewegung des Objekts (6, 6a..6d) vom zweiten Erfassungsbereich ($E_2$) weg heranzuziehen.

**Claims**

1. A method for the position determination of an object (6, 6a..6d), which is conveyed on a conveying device (1a..1c) by conveyor elements (2, $2_M$, $2_L$), comprising the steps

a) setting a positional value (P), which is assigned to the object (6, 6a..6d) in a controller (4) of the conveying device (1a..1c), to the position ($P_1$) of a first detection area ($E_1$) of a first sensor (Li) fixedly installed on the conveying device (6, 6a..6d), when the object (6, 6a..6d) is detected in the first detection area ($E_1$),
b) calculating a position ($P_{sig}$) of the object (6, 6a..6d) with the aid of rotation signals from drives (M) for the conveyor elements (2, $2_M$, $2_L$) of the conveying device (1a..1c), starting from the position ($P_1$) of the first detection area ($E_1$) during a movement of the object (6, 6a..6d) away from the first detection area ($E_1$), and
c) setting the positional value (P), which is assigned to the object (6, 6a..6d) in the controller (4) of the conveying device (1a..1c), to the position ($P_2$) of a second detection area ($E_2$) of the first sensor (Li) or of a second sensor ($L_2$) fixedly installed on the conveying device (1a..1c), when the object (6, 6a..6d) is detected in the second detection area ($E_2$),

**characterized in that**

d) a deviation ($\Delta P$) between the position ($P_{sig}$) calculated by means of the rotation signals from the drives (M) and the position ($P_2$) of the second detection area ($E_2$) is determined after the object (6, 6a..6d) has been detected in the second detection area ($E_2$), and

e) the determined deviation ($\Delta P$) for calculating a corrected position ($P_{korr}$) of the object (6, 6a..6d) with the aid of the rotation signals from the drives (M) during a movement of the object (6, 6a..6d) away from the second detection area ($E_2$) is used.

2. The method according to claim 1, **characterized in that** steps b) to e) are repeated recursively, wherein, in a further pass of step c), a further detection area of the first sensor (Li) or second sensor ($L_2$) or of a third sensor ($L_3$) fixedly installed on the conveying device (1a..1c) takes the place of the second detection area ($E_2$).

3. The method according to claim 1, **characterized in that** steps b) to e) are repeated recursively, wherein the second detection area ($E_2$) takes the place of the first detection area ($E_1$), and in a further pass of step c), a further detection area of the first sensor (Li) or second sensor ($L_2$) or of a third sensor ($L_3$) fixedly installed on the conveying device (1a..1c) takes the place of the second detection area ($E_2$).

4. The method according to one of claims 1 to 3, **characterized in that** the deviation ($\Delta P$) determined in step d) is applied to the distance between a reference point ($P_0$) and the position ($P_{sig}$) of the object (6, 6a..6d) calculated by means of the rotation signals from the drives (M), and the correction in step e) is made relative to the path traveled by the object (6, 6a..6d) starting from the second detection area ($E_2$).

5. The method according to claim 4, **characterized in that**, in step d), a correction factor

$$k = \frac{\Delta P}{P_{Sig}} = \frac{P_2 - P_{sig}}{P_{Sig}}$$

is calculated, and in step e), the corrected position

$$P_{korr} = (1 + k) \cdot P_{sig}$$

is calculated and is used as the basis for controlling the processes on the conveying device (1a..1c), wherein ($P_{sig}$) refers to the position of the object (6, 6a..6d) calculated by means of rotation signals from the drives (M), measured from the reference point (Po), and ($P_2$) refers to the position of the second detection area ($E_2$), also measured from the reference point ($P_0$).

6. The method according to one of claims 1 to 3, **characterized in that** in step d), an additive correction value

$$d = \Delta P = P_2 - P_{sig}$$

is calculated, and in step e), the corrected position

$$P_{korr} = d + P_{sig}$$

is calculated and is used as the basis for controlling the processes on the conveying device (6, 6a..6d), wherein ($P_{sig}$) refers to the position of the object (6, 6a..6d) calculated by means of rotation signals from the drives (M), measured from the reference point (Po), and ($P_2$) refers to the position of the second detection area ($E_2$), also measured from the reference point ($P_0$).

7. The method according to one of claims 1 to 6, **characterized in that** the object (6, 6a..6d) is moved between the first detection area ($E_1$) and the second detection area ($E_2$) at a constant speed (v).

8. The method according to one of claims 1 to 6, **characterized in that** the object (6, 6a..6d) is accelerated and/or decelerated between the first detection area ($E_1$) and the second detection area ($E_2$).

9. The method according to one of claims 1 to 6, **characterized in that** the object (6, 6a..6d) is moved at a constant speed (v) in some sections and is accelerated and/or decelerated in some sections between the first detection area ($E_1$) and the second detection area ($E_2$).

10. The method according to one of claims 1 to 9, **characterized in that** a correction factor k is assigned to a movement of the object (6, 6a..6d) at a constant speed (v), and an additive correction value d is assigned to an acceleration and/or a deceleration of the object (6, 6a..6d).

11. The method according to claim 5 and 6, **characterized in that**, in step e), the corrected position

$$P_{korr} = d + (1 + k) \cdot P_{sig}$$

is calculated and is used as the basis for controlling the processes on the conveying device (1a..1c).

12. The method according to one of claims 1 to 11, **characterized in that** an object block (BL), which comprises multiple objects (6a..6c) in close succession, is regarded as a single object (6, 6d) for the position determination.

13. The method according to one of claims 1 to 12, **characterized in that** the objects (6, 6a..6d) conveyed on the conveying device (1a..1c) comprise deformable bags, which are conveyed directly on conveyor elements (2, $2_M$, $2_L$), which are formed as conveyor rollers, and the calculation of a corrected position ($P_{korr}$) is performed for these bags.

14. The method according to one of claims 1 to 13, **characterized in that** it is carried out in or before an accumulation area (SB) for the objects (6, 6a..6d) conveyed on the conveying device (1a..1c).

15. A conveying device (1a..1c) with a controller (4) for the position determination of an object (6, 6a..6d) conveyed on the conveying device (1a..1c) by means of conveyor elements (2, $2_M$, $2_L$), wherein the controller (4) is configured to

a) set a positional value (P), which is assigned to the object (6, 6a..6d) in the controller (4) of the conveying device (1a..1c), to the position ($P_1$) of a first detection area ($E_1$) of a first sensor (Li) fixedly installed on the conveying device (6, 6a..6d), when the object (6, 6a..6d) is detected in the first detection area ($E_1$),
b) calculate a position ($P_{sig}$) of the object (6, 6a..6d) with the aid of rotation signals from drives (M) for the conveyor elements (2, $2_M$, $2_L$) of the conveying device (1a..1c), starting from the position ($P_1$) of the first detection area ($E_1$) during a movement of the object (6, 6a..6d) away from the first detection area ($E_1$), and
c) set the positional value (P), which is assigned to the object (6, 6a..6d) in the controller (4) of the conveying device (1a..1c), to the position ($P_2$) of a second detection area ($E_2$) of the first sensor (Li) or of a second sensor ($L_2$) fixedly installed on the conveying device (1a..1c), when the object (6, 6a..6d) is detected in the second detection area ($E_2$),

**characterized in that**

the controller (4) is additionally configured to
d) determine a deviation ($\Delta P$) between the position ($P_{sig}$) calculated by means of the rotation signals from the drives (M) and the position ($P_2$) of the second detection area ($E_2$) after the object (6, 6a..6d) has been detected in the second detection area ($E_2$), and
e) use the determined deviation ($\Delta P$) for calculating a corrected position ($P_{korr}$) of the object (6, 6a..6d) with the aid of the rotation signals from the drives (M) during a movement of the object (6, 6a..6d) away from the second detection area ($E_2$).

## Revendications

1. Procédé de détermination de la position d'un objet (6, 6a... 6d), qui est convoyé sur un dispositif de convoyage (la... 1c) par des éléments de convoyage (2, $2_M$, $2_L$), comprenant les étapes suivantes

a) définition d'une valeur de position (P), qui est attribuée à l'objet (6, 6a...6d) dans une commande de (4) du dispositif de convoyage (1a... 1c), à la position ($P_1$) d'une première zone de détection ($E_1$) d'un premier capteur ($L_1$), installé de manière stationnaire sur le dispositif de convoyage (6, 6a... 6d) lorsque l'objet (6, 6a... 6d) est détecté dans la première zone de détection ($E_1$),
b) calcul d'une position ($P_{sig}$) de l'objet (6, 6a... 6d) à l'aide de signaux de rotation de dispositifs d'entraînement (M) pour les éléments de convoyage (2, $2_M$, $2_L$) du dispositif de convoyage (la... 1c) provenant de la position ($P_1$) de la première zone de détection ($E_1$) pendant un éloignement de l'objet (6, 6a... 6d) de la première zone de détection ($E_1$) et
c) définition de la valeur de position (P) qui est attribuée à l'objet (6, 6a... 6d) dans la commande (4) du dispositif de convoyage (la... 1c), à la position ($P_2$) d'une deuxième zone de détection ($E_2$) du premier capteur (Li) ou d'un deuxième capteur ($L_2$), installé de manière stationnaire sur le dispositif de convoyage (la... 1c) lorsque l'objet (6, 6a... 6d) est détecté dans la deuxième zone de détection ($E_2$),

**caractérisé en ce que**

d) un écart ($\Delta P$) entre la position ($P_{sig}$) calculée avec les signaux de rotation des entraînements (M) et la position ($P_2$) de la deuxième zone de détection ($E_2$) est déterminé après que l'objet (6, 6a... 6d) a été détecté dans la deuxième zone de détection ($E_2$) et
e) l'écart ($\Delta P$) déterminé est utilisé pour le calcul d'une position corrigée ($P_{korr}$) de l'objet (6, 6a... 6d) à l'aide des signaux de rotation des entraînements (M) pendant un éloignement de l'objet (6, 6a... 6d) de la deuxième zone de détection ($E_2$).

2. Procédé selon la revendication 1, **caractérisé en ce que** les étapes b) à e) sont répétées de manière récursive, dans lequel, lors d'une nouvelle exécution de l'étape c), une autre zone de détection du premier capteur (Li) ou du deuxième capteur ($L_2$) ou d'un

troisième capteur ($L_3$) installé de manière stationnaire sur le dispositif de convoyage (la... 1c) remplace la deuxième zone de détection ($E_2$).

3. Procédé selon la revendication 1, **caractérisé en ce que** les étapes b) à e) sont répétées de manière récursive, dans lequel la deuxième zone de détection ($E_2$) remplace la première zone de détection ($E_1$) et, lors d'une nouvelle exécution de l'étape c), une autre zone de détection du premier capteur (Li) ou du deuxième capteur ($L_2$) ou d'un troisième capteur ($L_3$) installé de manière stationnaire sur le dispositif de convoyage (la... 1c) remplace la deuxième zone de détection ($E_2$).

4. Procédé selon l'une des revendications 1 à 3, **caractérisé en ce que** l'écart ($\Delta P$) déterminé à l'étape d) est rapporté à la distance entre un point de référence ($P_0$) et la position ($P_{sig}$) de l'objet (6, 6a... 6d), calculée avec les signaux de rotation des entraînements (M), et la correction de l'étape e) est effectuée par rapport au trajet parcouru par l'objet (6, 6a... 6d) à partir de la deuxième zone de détection ($E_2$).

5. Procédé selon la revendication 4, **caractérisé en ce que**, à l'étape d), un facteur de correction

$$k = \frac{\Delta P}{P_{Sig}} = \frac{P_2 - P_{sig}}{P_{Sig}}$$

est calculé et, à l'étape e), la position corrigée

$$P_{korr} = (1 + k) \cdot P_{sig}$$

est calculée et utilisée pour le contrôle des processus sur le dispositif de convoyage (la... 1c), dans lequel ($P_{sig}$) désigne la position de l'objet (6, 6a... 6d), calculée avec les signaux de rotation des entraînements (M), mesurée par rapport au point de référence ($P_0$) et ($P_2$) désigne la position de la deuxième zone de détection ($E_2$), également mesurée par rapport au point de référence ($P_0$).

6. Procédé selon l'une des revendications 1 à 3, **caractérisé en ce que**, à l'étape d), une valeur de correction additive

$$d = \Delta P = P_2 - P_{sig}$$

est calculée et, à l'étape e), la position corrigée

$$P_{korr} = d + P_{sig}$$

est calculée et utilisée pour le contrôle des processus sur le dispositif de convoyage (6, 6a... 6d), dans lequel ($P_{sig}$) désigne la position de l'objet (6, 6a... 6d), calculée avec les signaux de rotation des entraînements (M), mesurée par rapport au point de référence ($P_0$) et ($P_2$) désigne la position de la deuxième zone de détection ($E_2$), également mesurée par rapport au point de référence ($P_0$).

7. Procédé selon l'une des revendications 1 à 6, **caractérisé en ce que** l'objet (6, 6a... 6d) est déplacé entre la première zone de détection ($E_1$) et la deuxième zone de détection ($E_2$) à vitesse constante (v).

8. Procédé selon l'une des revendications 1 à 6, **caractérisé en ce que** l'objet (6, 6a... 6d) est accéléré et/ou ralenti entre la première zone de détection ($E_1$) et la deuxième zone de détection ($E_2$).

9. Procédé selon l'une des revendications 1 à 6, **caractérisé en ce que** l'objet (6, 6a... 6d) est, à certains endroits, déplacé entre la première zone de détection ($E_1$) et la deuxième zone de détection ($E_2$) à vitesse constante (v) et, à certains endroits, accéléré et/ou ralenti.

10. Procédé selon l'une des revendications 1 à 9, **caractérisé en ce que**, à un déplacement de l'objet (6, 6a... 6d) à vitesse constante (v), est attribué un facteur de correction k et, à une accélération et/ou un ralentissement de l'objet (6, 6a... 6d), est attribuée une valeur de correction additive d.

11. Procédé selon la revendication 5 et 6, **caractérisé en ce que**, à l'étape e), la position corrigée

$$P_{korr} = d + (1 + k) \cdot P_{sig}$$

est calculée et utilisée pour le contrôle des processus sur le dispositif de convoyage (la... 1c).

12. Procédé selon l'une des revendications 1 à 11, **caractérisé en ce qu'**un bloc d'objet (BL), qui comprend des objets (6a... 6c) se succédant près les uns des autres, est considéré, pour la détermination de la position, comme un objet unique (6, 6d).

13. Procédé selon l'une des revendications 1 à 12, **caractérisé en ce que** les (6, 6a... 6d) convoyés sur le dispositif de convoyage (la... 1c) comprennent des sachets déformables qui sont convoyés directement sur des éléments de convoyage (2, $2_M$, $2_L$), qui sont conçus comme des rouleaux de convoyage et le calcul d'une position corrigée ($P_{korr}$) est effectué pour ces sachets.

14. Procédé selon l'une des revendications 1 à 13, **caractérisé en ce que** celui-ci est exécuté dans ou avant une zone d'accumulation (SB) pour les objets (6, 6a... 6d) convoyés sur le dispositif de convoyage (la... 1c).

15. Dispositif de convoyage (la... 1c) avec une commande (4) pour la détermination de la position d'un objet (6, 6a... 6d) convoyé sur le dispositif de convoyage (la... 1c) par des éléments de convoyage ($2, 2_M, 2_L$), dans lequel la commande (4) est conçue pour

a) définir une valeur de position (P), qui est attribuée à l'objet (6, 6a... 6d) dans la commande (4) du dispositif de convoyage (la... 1c), à la position ($P_1$) d'une première zone de détection ($E_1$) d'un premier capteur (Li) installé de manière stationnaire sur le dispositif de convoyage (6, 6a... 6d) lorsque l'objet (6, 6a... 6d) est détecté dans la première zone de détection ($E_1$),
b) calculer une position ($P_{sig}$) de l'objet (6, 6a... 6d) à l'aide des signaux de rotation d'entraînements (M) pour les éléments de convoyage ($2, 2_M, 2_L$) du dispositif de convoyage (la... 1c) à partir de la position ($P_1$) de la première zone de détection ($E_1$) pendant un éloignement de l'objet (6, 6a... 6d) de la première zone de détection ($E_1$) et
c) définir la valeur de position (P) qui est attribuée à l'objet (6, 6a... 6d) dans la commande (4) du dispositif de convoyage (la... 1c), à la position ($P_2$) d'une deuxième zone de détection ($E_2$) du premier capteur (Li) ou d'un deuxième capteur ($L_2$), installé de manière stationnaire sur le dispositif de convoyage (la... 1c) lorsque l'objet (6, 6a... 6d) est détecté dans la deuxième zone de détection ($E_2$),

**caractérisé en ce que**

la commande (4) est en outre conçue pour
d) déterminer un écart ($\Delta P$) entre la position ($P_{sig}$) calculée avec les signaux de rotation des entraînements (M) et la position ($P_2$) de la deuxième zone de détection ($E_2$), après qu_e l'objet (6, 6a... 6d) a été détecté dans la deuxième zone de détection ($E_2$) et
e) utiliser l'écart ($\Delta P$) déterminé pour le calcul d'une position corrigée (Pkorr) de l'objet (6, 6a... 6d) à l'aide des signaux de rotation des entraînements (M) pendant un éloignement de l'objet (6, 6a... 6d) de la deuxième zone de détection ($E_2$).

**Fig. 1**

**Fig. 2**

**Fig. 3**

**Fig. 4**

**Fig. 5**

4

$P = P_{sig}$

1b

$P_4$ $P_3$ $P_2$ $P_{sig}$ $P_{real}$ $P_1$ $P_0$

$L_4$ $L_3$ $L_2$ 6 6 $L_1$

**Fig. 6**

4

$P = P_2$

1b

$\Delta P$

$P_4$ $P_3$ $P_{sig}$ $P_2$ $P_{real}$ $P_1$ $P_0$

$L_4$ $L_3$ 6 6 $L_1$

$L_2$

**Fig. 7**

**Fig. 8**

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5070995 A